Europäisches Patentamt

European Patent Office

Office européen des brevets

(11) Veröffentlichungsnummer: **0 034 329**
**B1**

(12) **EUROPÄISCHE PATENTSCHRIFT**

(45) Veröffentlichungstag der Patentschrift:
03.10.84

(21) Anmeldenummer: **81100937.2**

(22) Anmeldetag: **11.02.81**

(51) Int. Cl.³: **F 41 H 5/04, C 22 C 1/05,
C 04 B 41/04**

(54) **Panzerung.**

(30) Priorität: **15.02.80 DE 3005586**

(43) Veröffentlichungstag der Anmeldung:
**26.08.81 Patentblatt 81/34**

(45) Bekanntmachung des Hinweises auf die Patenterteilung:
**03.10.84 Patentblatt 84/40**

(84) Benannte Vertragsstaaten:
**AT BE CH FR GB IT LI NL SE**

(56) Entgegenhaltungen:
**CH - A - 234 823
DE - A - 1 578 333
DE - A - 1 608 187
DE - A - 2 132 812
DE - B - 1 584 284
GB - A - 2 003 932
US - A - 3 599 601
US - A - 3 864 154
US - A - 4 030 427**

(73) Patentinhaber: **Kernforschungsanlage Jülich
Gesellschaft mit beschränkter Haftung, Postfach 1913,
D-5170 Jülich (DE)**

(72) Erfinder: **Luhleich, Hartmut, Dr., Chlodwigplatz 15,
D-5160 Düren (DE)**
Erfinder: **Dias, Francisco Joachim, An der Lünette 3,
D-5170 Jülich (DE)**

## Beschreibung

Die Erfindung bezieht sich auf einen für eine Panzerung verwendbaren, aus Verbundwerkstoff bestehenden Körper, der aus einem porösen Formkörper von hoher Härte und Festigkeit besteht, der mit einem nach dem Erkalten eine hohe Biege- und Scherfestigkeit sowie Elastizität aufweisenden Metall getränkt ist. Ein derartiger Körper ist aus der US-A-3 864 154 bekannt.

Als Werkstoff für Panzerplatten sind bisher im allgemeinen Stahl oder Stahllegierungen verwendet worden. Diese Panzerplatten weisen zwar eine hohe Biege-, Scher- und Druckfestigkeit auf. Doch haben diese Platten den Nachteil, dass ihre Herstellung aufwendig, ihr spezifisches Gewicht hoch ist und dass sie selbst bei einer solchen Dicke, wie sie für Panzerplatten von Panzerfahrzeugen noch als tragbar angesehen werden können, keine hinreichende Sicherheit gegen Hohlladungen bieten.

Aufgabe der Erfindung ist es, ausgehend von dem eingangs angegebenen Stand der Technik, eine für Panzerungen, insbesondere für Panzerfahrzeuge geeignete Platte zu schaffen, die bei hinreichender Biege-, Scher- und Druckfestigkeit auch Schutz gegen Hohlladungen gewährleistet.

Diese Aufgabe wird gemäss der Erfindung dadurch gelöst, dass der plattenförmig ausgebildete Formkörper aus Siliciumkarbid besteht und eine homogen über dem Formkörper verteilte, offene Porosität von 30 bis 70 Vol.-%, vorzugsweise 40 bis 50 Vol.-%, aufweist.

Der Druckschrift DE-A-2 132 812 ist zwar zu entnehmen, dass als Formkörper für einen Verbundkörper unter anderem ein Formkörper geeignet sein soll, der ausser anderen Komponenten auch Siliciumkarbid enthält. Ein aus reinem Siliciumkarbid bestehender Formkörper, noch dazu mit einem offenen Porensystem, wie es der Formkörper gemäss der Erfindung besitzt, ist durch den vorliegenden Stand der Technik weder nachweisbar noch nahegelegt.

In Druckschrift DE-A-1 608 187 ist Siliciumkarbid ausser einer ganzen Reihe weiterer Elemente als Ausgangsprodukt für einen durch Sintern herzustellenden tränkbaren Skelettkörper angegeben. Auch dieser Druckschrift ist jedoch an keiner Stelle auch nur ein Hinweis auf die Herstellung eines Formkörpers aus Siliciumkarbid mit einem homogen verteilten, offenen Porensystem zu entnehmen.

Der Formkörper gemäss der Erfindung wird nach einem nicht vorveröffentlichten Vorschlag unter Verwendung einer pulverförmigen oder körnigen Mischung aus Silicium und Kohlenstoff und gegebenenfalls unter Beimischung von Siliciumkarbid hergestellt. Dabei werden die Körner oder Partikeln des Pulvers mit einem organischen Bindemittel umhüllt. Aus der auf diese Weise gebildeten Masse wird zunächst durch Plastifizieren des verwendeten Bindemittels ein Grünkörper geformt, der im Anschluss daran verkokt wird. In einer weiteren Verfahrensstufe wird der Formkörper zur Umsetzung des verwendeten Ausgangsmaterials zu Siliciumkarbid in einer Inertgasatmosphäre unter einem Druck von etwa 1 bar und höher, um das Abdampfen von Silicium zu verhindern, auf eine zwischen etwa 1400 und 1600 °C liegende Temperatur mit hoher Geschwindigkeit aufgeheizt.

Dabei besteht eine besonders vorteilhafte Ausgestaltung des Verfahrens zur Herstellung von Panzerplatten gemäss der Erfindung darin, dass zur Bildung der mit dem Bindemittel überzogenen Körner oder Partikeln eine Bindemittellösung gebildet wird, in der die Körner oder Partikeln aufgeschlämmt werden. Im Anschluss daran wird die Aufschlämmung mittels einer Düse in eine zur Abscheidung des Bindemittels dienende Flüssigkeit so eingegeben, dass die Körner oder Partikeln mit dem Bindemittel gleichmässig überzogen werden. In einer sich daran anschliessenden Verfahrensstufe wird die Masse der mit dem in dieser Weise mit dem Bindemittelfilm überzogenen Körner oder Partikeln durch Filtrieren oder Dekantieren von der Abscheidungsflüssigkeit abgetrennt und getrocknet. Die weiteren Massnahmen laufen im Anschluss daran in der zuvor angegebenen Weise ab (vgl. auch DE-C-2 040 252, DE-C-2 133 044 und DE-C-2 360 982).

Die dem jeweiligen Verwendungszweck entsprechende genaue Formgebung erfolgt bei diesem Verfahren durch Extrudieren oder in einer Gesenkpresse, wobei lediglich geringe Drucke angewendet werden müssen. Um eine Vergrösserung der Siliciumkarbidkristallite und infolge dessen eine Erhöhung der Verfestigung des Gefüges sowie eine Vergrösserung der Poren des gebildeten plattenförmigen Siliciumkarbidkörpers zu erreichen, wird der bereits umgesetzte Körper bei Temperaturen zwischen 1700 und 2100 °C getempert.

Die Porengrössen des Formkörpers gemäss der Erfindung liegen, abhängig von der Körnung des Ausgangsmaterials, bei etwa 1 bis 500 µm, vorzugsweise bei 5 bis 30 µm. Als Ausgangspulver werden dafür Mahlprodukte mit einer maximalen Korngrösse von bis zu 100 µm, vorzugsweise bis zu 60 µm für Kohlenstoff und von bis zu 50µm insbesondere bis zu 10 bis 20 µm für Silicium verwendet.

In einem weiteren Verfahrensschritt wird der poröse plattenförmige Siliciumkarbidkörper in einem Druckbehälter zunächst evakuiert und sodann in das zum Tränken oder Imprägnieren vorgesehene Metallbad getaucht, wobei ein Druck von bis zu 50 bar ausgeübt wird. Anschliessend wird die mit der metallischen Flüssigkeit getränkte oder imprägnierte Platte aus dem Metallbad herausgenommen und nach Abfliessen des noch an den Oberflächen der Platte haftenden Metalls langsam abgekühlt. Falls erforderlich, wird an der Oberfläche der Platte etwa noch anhaftendes Metall durch Abätzen enffernt.

Besondere Ausführungsformen des für eine Panzerung verwendbaren Körpers gemäss der Erfindung bestehen darin, dass der poröse Formkörper mit Stahl oder einer Stahllegierung oder mit einer nach dem Erkalten eine hohe Biege- und Scherfestigkeit sowie Elastizität aufweisenden Metallegierung getränkt ist.

Ausführungsbeispiel

Es wurden 100 g Siliciumpulver (Korngrösse < 53 μm; Siebdurchgang durch ein 270-mesh-Sieb) und 14 g eines Kohlenstoffpulvers bestehend aus 90 Gew.-% Elektrographit und 10 Gew.-% Holzkohle (Hauptkorngrösse 10 μm bis 20 μm) in einer Lösung von 600 ml Äthanol und 6 ml Eisessig sowie 61 g Phenolformaldehydharzbinder aufgeschlämmt. Die Aufschlämmung wurde unter Rühren auf 50 °C erwärmt und nach einer halben Stunde auf Raumtemperatur abgekühlt. Die Aufschlämmung wurde dann durch eine Düse in einen Wasserstrom von 15 °C eingespritzt, wobei 10 l Wasser verbraucht wurden. Die gebildete Masse wurde unter Rühren auf 40 °C erwärmt und nach einer halben Stunde auf Raumtemperatur abgekühlt. Nach Absetzen des gebildeten Schlammes wurde die Flüssigkeit dekantiert und der Schlamm abfiltriert und getrocknet.

175 g des so gebildeten Pulvers wurden in einen quadratischen Formkasten von 10,8 cm Kantenlänge gleichmässig eingestreut und mit einem Stempel in einer Presse warmgepresst. Nach dem Erkalten wurde die gebildete Platte von 10,8 cm Kantenlänge und 1,1 cm Dicke entformt und unter einem Argonstrom durch Aufheizen auf 800 °C verkokt. Die Dimensionen der Platte betrugen nach dem Verkoken 10,0 cm Kantenlänge und 1,0 cm Dicke. Anschliessend wurde die Platte in einen evakuierbaren Ofenraum gebracht, evakuiert und mit Argon geflutet. Unter einem Argondruck von 1 bar wurde die Platte auf 1350 °C aufgeheizt und 5 Minuten auf dieser Temperatur belassen. Danach wurde mit einer hohen Aufheizgeschwindigkeit (von etwa 5 °C/min) auf 1600 °C erhitzt und anschliessend abgekühlt. Die silizierte Platte wurde sodann in einen Vakuumdruckbehälter eingebracht, in dem sich ein Bad aus Chromnickelstahl auf einer Temperatur von 1600 °C befand. Der Vakuumbehälter wurde zunächst evakuiert, anschliessend die Platte in das Stahlbad vollständig eingetaucht und der Vakuumdruckbehälter mit einem Argondruck von 20 bar beaufschlagt. Hierauf wurde die Platte aus dem Bad gezogen und nach dem Ablaufen des überschüssigen Stahls und langsamem Abkühlen auf Raumtemperatur aus dem Vakuumdruckbehälter entnommen.

Als Panzerungsplatte sollen dabei selbstverständlich nicht nur ebene Körper, sondern Panzerungen allgemein verstanden werden.

**Patentansprüche**

1. Für eine Panzerung verwendbarer, aus Verbundwerkstoff bestehender Körper, der aus einem porösen Formkörper von hoher Härte und Festigkeit besteht, der mit einem nach dem Erkalten eine hohe Biege- und Scherfestigkeit sowie Elastizität aufweisenden Metall getränkt ist, dadurch gekennzeichnet, dass der plattenförmig ausgebildete Formkörper aus Siliciumkarbid besteht und eine homogen über dem Formkörper verteilte, offene Porosität von 30 bis 70 Vol.-%, vorzugsweise 40 bis 50 Vol.-%, aufweist.

2. Für eine Panzerung verwendbarer Körper gemäss Anspruch 1, dadurch gekennzeichnet, dass der poröse Formkörper mit Stahl oder einer Stahllegierung getränkt ist.

3. Für eine Panzerung verwendbarer Körper gemäss Anspruch 1, dadurch gekennzeichnet, dass der poröse Formkörper mit einer nach dem Erkalten eine hohe Biege- und Scherfestigkeit sowie Elastizität aufweisenden Metallegierung getränkt ist.

**Claims**

1. Body which can be used for armouring and which is made of composite material, and which comprises a porous shaped body of great hardness and strength which is impregnated with a metal exhibiting a high degree of bending strength and shearing strength and also elasticity after cooling, characterised in that the shaped body, which is made plate-shaped, is made of silicon carbide and has an open porosity of 30 to 70% by volume, preferably 40 to 50% by volume, distributed uniformly over the shaped body.

2. Body which can be used for armouring according to claim 1, characterised in that the porous shaped body is impregnated with steel or a steel alloy.

3. Body which can be used for armouring according to claim 1, characterised in that the porous shaped body is impregnated with a metal alloy which after cooling has high bending and shearing strength and also elasticity.

**Revendications**

1. Corps en un matériau composite pouvant être utilisé pour un blindage qui est constitué d'un corps façonné poreux de grande dureté et de grande résistance et imprégné d'un métal présentant une résistance à la flexion et au cisaillement élevée après le refroidissement ainsi que de l'élasticité, caractérisé en ce que le corps façonné en forme de plaque est en carbure de silicium, et présente une porosité ouverte répartie de manière homogène sur le corps façonné, de 30 à 70% en volume et, de préférence, de 40 à 50% en volume.

2. Corps pouvant être utilisé pour un blindage suivant la revendication 1, caractérisé en ce que le corps façonné poreux est imprégné d'acier ou d'un alliage d'acier.

3. Corps pouvant être utilisé pour un blindage suivant la revendication 1, caractérisé en ce que le corps façonné poreux, ayant une résistance élevée à la flexion et au cisaillement après le refroidissement, ainsi que de l'élasticité, est imprégné d'un alliage métallique.